# EUROPEAN PATENT APPLICATION

(11) **EP 0 532 997 A1**
(43) Date of publication of application: **24.03.1993**
(21) Application number: 92115186.6
(22) Date of filing: 04.09.1992
(51) Int. Cl.: G11B 19/12, G11B 27/10, G11B 27/24, G11B 23/42, G11B 33/10

(54) **Method and apparatus for selecting information on a data storage medium**

(30) Priority: 16.09.1991 US 760301
(71) Applicant: EASTMAN KODAK COMPANY, Rochester, New York 14650-2201 (US)
(72) Inventor: Lee, Y. Ellen, Rochester, New York 14650-2201 (US); Weldy, John Allan, Rochester, New York 14650-2201 (US)
(74) Representative: Wagner, Karl H., Dipl.-Ing.

(57) **Abstract**

The present invention relates to a data storage medium, such as a compact disk, combined with a data reader in which a stick-on label is applied to the data storage medium on the side opposite the data readable side. The stick-on label includes a user markable surface on one side and an adhesive coating on the other side which allows the label to be attached and removed from the data storage medium. The label comprises regions containing region numbers which correspond to information stored on the data storage medium. A user mark in a region indicates that the corresponding information is to be skipped when the data storage medium is played on the data reader. The printing which outlines the regions and provides the region numbers is light transparent. The data reader includes a scanner for scanning the regions as the data storage medium rotates. A timing ring with timing marks aids in the sampling of the user marks on the stick-on label.

## Description

### TECHNICAL FIELD

The present invention relates to a data storage medium and data reader which automatically selects information specified on a label attached to the data storage medium. More particularly, the present invention relates to the use of an attachable and removable label with a markable surface which is applied to a data storage medium. This markable surface is annotated by the user to indicate which information on the data storage medium should be selected when the data storage medium is played using a data reader.

This invention applies to a data storage medium wherein information is stored in or on at least one side of the medium with one side of the medium having an open area for the attachment of a label. In particular, this invention applies to the data storage medium of a compact disk (CD) which stores various information, including audio compact disks, photographic compact disks, and compact disks with Read Only Memory (CD ROM).

### BACKGROUND OF THE INVENTION

Audio compact disks (CD) store song tracks which can be played using a compact disk player connected to a stereo system. Photographic compact disks store photographs which can be displayed on a conventional television screen using an appropriate compact disk player. Likewise, a CD ROM (compact disk with read only memory) is a compact disk which stores quantities of data that can be accessed by a computer system using an appropriate compact disk player.

With each of these compact disk systems, the information stored on the compact disk is encoded on a surface of the disk which may be on the outside of the disk and or in the disk under one or more transparent layers. The opposite side of the disk is conventionally printed with some textual information. For example, with an audio compact disk, the name of the producing company is typically printed along with a list of the song tracks contained on the compact disk. In the case of the photographic compact disk, the logo of the film processing laboratory, such as Kodak, that converted the film images into digital images and stored the images on the compact disk, could be printed on the disk.

Though a user may purchase an audio compact disk of her/his favorite music group, she/he may not enjoy all the song tracks contained on the compact disk. Likewise, a user may prefer not to share all of her/his photographs contained on a photographic compact disk with other individuals. The user may prefer that these song tracks or photographs be automatically skipped each time the particular compact disk is inserted into the player.

One method of skipping and/or modifying the play of these song tracks or photographs is to program the compact disk player to identify the particular compact disk and skip the selected information whenever that particular compact disk is inserted into the player for play. One drawback of this method is that the players are then required to have memory linked to a serial number or other identification means of the particular compact disk. Another drawback is that the program is typically only valid for the compact disk player for which it was programmed, meaning that a second user's compact disk player might not contain the same programmed information as the first user's compact disk player. Yet another drawback is that some compact disk players have a limit to the memory storage capacity, meaning that it may not be possible for all the disks from a user's extensive collection to be programmed into the player. Still another drawback is that the memory of the compact disk player must be non-volatile.

In U.S. Patent Application Serial No. 760, 650* entitled, "Picture Orientation Markable Photo Compact Disk and Method and Apparatus for Using Same" filed on even date with the present application and bearing the assignee's Docket No. 61,586, Y. Ellen Lee disclosed a method of annotating and editing the images stored on photographic compact disks where the side opposite the data readable side of the compact disk is printed. The user applies marks directly onto the compact disk to control the editing the compact disk's images.
* This application incorporated by reference corresponds to EP application No. having the same title and being filed in the EPO on the same day. The EPO representative's Reference No. is H-E-12655/61586.

The present application covers an improved method and apparatus for annotating a data storage medium, such as a compact disk, to control the playback of information contained on the data storage medium.

### SUMMARY OF THE INVENTION

It is an object of the present invention to provide a data storage medium, such as a compact disk (CD), with an attachable and removable label which can be marked by the user, where the marks act as control indicia for selected information which may be skipped and/or modified for play when the compact disk is played on a compact disk player.

It is another object of the present invention to provide a method and apparatus for reading the user marks on the label applied to a data storage medium.

It is a further object of the present invention to provide a player that automatically interprets user marks formed on a label that is attachable to a data storage medium, thus playing only the user desired information from the data storage medium.

The above objects can be accomplished by a compact disk and a compact disk player used to read the compact disk in which the compact disk includes an attachable and removable stick-on label with a markable surface. The label, applied to the side of the compact disk opposite the data readable side, can be annotated by the user to indicate selected information stored on the compact disk which should be skipped when reviewed on a compact disk player.

The label may be attached to the compact disk, for example, by the use of an adhesive coating applied to a surface of the label which is opposite the markable surface side. This label is then attached to the compact disk in the area on the compact disk appropriately designated for the label.

The markable surface of the label includes regions which may be marked by the user to indicate which information stored on the compact disk should be skipped and/or modified for play. The compact disk player includes a scanner for scanning the regions as the compact disk rotates. The player determines which of the regions have been marked based on the sensor outputs and supplies a control code which causes the information to be skipped and/or modified for playing. These regions are circumferentially arranged in partial rings on the label allowing a light emitting detector unit to scan the plural regions as the compact disk rotates. A clocking or timing ring aids in the sampling of the user markable regions.

At least one advantage of the present invention is that it provides a method whereby user-information can be added, removed, or modified to a write-once and/or premastered media such that the user-information is physically attached to the media and is, therefore, an integral component of the media. By physically attaching this user-information to the media, the desired user-information is retained with the media and the user-information can be utilized by any compact disk player that can decode the user-information. Thus, the compact disk player is not required to have memory linked to the media serial numbers or other identification means.

The foregoing and other objects, features, and advantages of the present invention will become more apparent from the following more particular description of the preferred embodiments of the invention, as illustrated in the accompanying drawings.

### BRIEF DESCRIPTION OF THE DRAWINGS

Figure 1 illustrates a compact disk where the side opposite the data readable side is shown;
Figure 2 illustrates a stick-on type label according to the present invention;
Figure 3A illustrates the positioning of the light emitting diode-phototransistor detector units for detecting the user marks on the label attached to the compact disk;
Figures 3B and 3C illustrate the positioning of the light emitting diode-phototransistor detector units in the compact disk player;
Figure 4 illustrates the geometry of the light emitting diode-phototransistor detector unit confronting a compact disk;
Figure 5 depicts the relationship between the light emitting diode-phototransistor detector units and the partial rings;
Figure 6 is a timing diagram showing the signals produced by the detector unit arrangement of Figure 5 reading the stick-on label of Figure 2;
Figure 7 illustrates in block diagram form the components of the compact disk player system used to determine the skipping of the information;
Figure 8 is a flow diagram depicting the logic performed by the Central Processing Unit (CPU) and multiplexer components of Figure 7;
Figure 9 illustrates an alternate format for the label;
Figure 10 illustrates a compact disk without printed information where the side opposite the data readable side is shown;
Figure 11 illustrates a variety of methods to indicate to the user where the user mark should be placed; and
Figure 12 illustrates yet another embodiment of a label according to the present invention.

### DESCRIPTION OF THE PREFERRED EMBODIMENTS

The following is a detailed description of the preferred embodiments of the invention, reference being made to the drawings in which the same reference numerals identify the same elements of structure in each of the several figures.

While the preferred embodiments relate to a conventional CD optical disk storage medium such as a 120mm disk, those skilled in the art will recognize that the invention also applies to other data storage mediums of various sizes and or shapes.

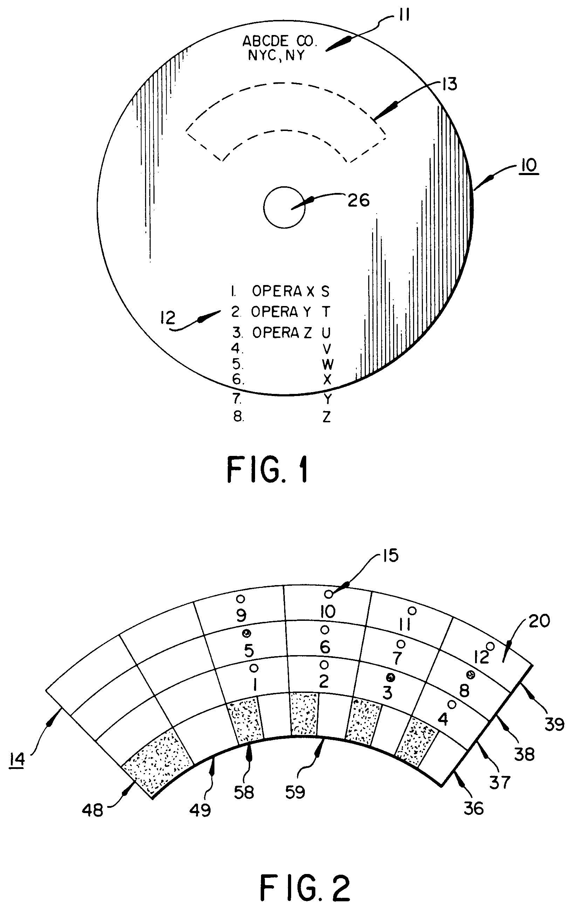

Figure 1 illustrates a conventional audio compact disk (CD) 10 where the side shown is the side opposite the data readable side. Conventionally, this side of an audio compact disk is printed with the producing company's name 11 along with content information 12, such as a list of the song tracks. Rotational axis 26 of the compact disk 10 and the dotted area 13 (label space) will be discussed in more detail later.

Figure 2 illustrates a label 14 which comprises an adhesive surface on the back side. The adhesive is strong enough to adhere the label 14 to the compact disk 10 during numerous plays. Yet the adhesive does not permanently join the label 14 to the compact disk 10, allowing the label 14 to be removed from the compact disk 10 by the user.

The front side of the label 14 comprises a user markable surface which will accept and retain a mark from a soft tipped writing utensil, such as from a conventional felt tip pen or marker. While a writing utensil which provides non-erasable marks can be used, it is preferred that the marks from the writing utensil be erasable since this allows the user to change the user marks on the label 14.

As shown in Figure 2, the label 14 is a truncated sector which includes four partial circumferential rings 36-39. The three outermost partial rings 37-39 are used to indicate which song tracks should be skipped during play. The innermost partial ring 36 is a clocking or timing ring which is used to indicate when the partial rings 37-39 should be sampled.

Each of the partial rings 37-39 is divided into regions 20. Each of the regions 20 include a region number, such as "3", which, for the example of region number "3", corresponds to the third song track stored on the audio compact disk. Each of the regions 20 also includes an identified area 15 to indicate to the user where the user mark should be placed. In Figure 2, this identified area 15 is a circle. The user mark indicates the song track corresponding to the region 20 which should be skipped when the compact disk 10 is played. To restore the song track to the list of tracks to be played, the user needs only to erase the user mark in the corresponding region 20. In Figure 2, the identified areas 15 associated with song tracks 3, 5, and 8 have been marked (darkened).

The timing ring 36 includes dark timing marks 58 and light timing marks 59 which correspond to an associated region 20 and are used for sampling. At the beginning of the timing ring 36 is a dark index mark 48 and a light index mark 49 which are used to indicate the beginning of the regions 20 and to synchronize the sampling system.

The printing on the label 14, such as the lines which outline the regions 20 and the region numbers, for example "3", should preferably be transparent to the light used to scan the regions 20. However, the dark index mark 48 and the dark timing marks 58 should be opaque to the light used for scanning the timing ring 36.

Note that though the label 14 shown in Figure 2 contains twelve regions 20 which may be marked by the user, while the audio compact disk 10 shown in Figure 1 only contains eight song tracks as shown by the content information 12. Therefore, if the label 14 where applied to the compact disk 10, any user marks in the regions 20 corresponding to a song track beyond the eighth song track will be interpreted and ignored by the compact disk player.

Figure 1 shows a space 13 designated by dashed lines in which to locate the label 14 on the compact disk 10. The size and shape of the space 13 is equal to the size and shape of label 14. The space 13 i-s located on the compact disk 10 such that the distance from the axis 26 of the compact disk 10 to the inner circular edge of the partial ring 36 is equal to the radius of the inner circular edge of the partial ring 36. Likewise, the distance from the axis 26 of the compact disk 10 to the outer circular edge of the partial ring 39 is equal to the radius of the outer circular edge of the partial ring 39. Note that the space 13 is also preferably located so as to not cover the printed information 11,12 which appears on the compact disk 10 as shown in Figure 1. This space 13 can be printed on the compact disk 10 by the compact disk manufacturer using light transparent material. If no space 13 exists on the compact disk 10, the user can still apply the label 14 to the compact disk 10 but may require assistance, such as a locating fixture or template, to properly locate the label 14.

When the label 14 is applied to the compact disk 10 in the space 13, the song tracks on the compact disk 10, as designated by the marked regions 20 on the label 14, would be skipped as set forth in Table 1.

**Table 1**

| Track Number | Is the Track marked? | Action |
|---|---|---|
| 1 no | Opera S is played | |
| 2 no | Opera T is played | |
| 3 yes | Opera U is NOT played | |
| 4 no | Opera V is played | |
| 5 yes | Opera W is NOT played | |
| 6 no | Opera X is played | |
| 7 no | Opera Y is played | |
| 8 yes | Opera Z is NOT played | |

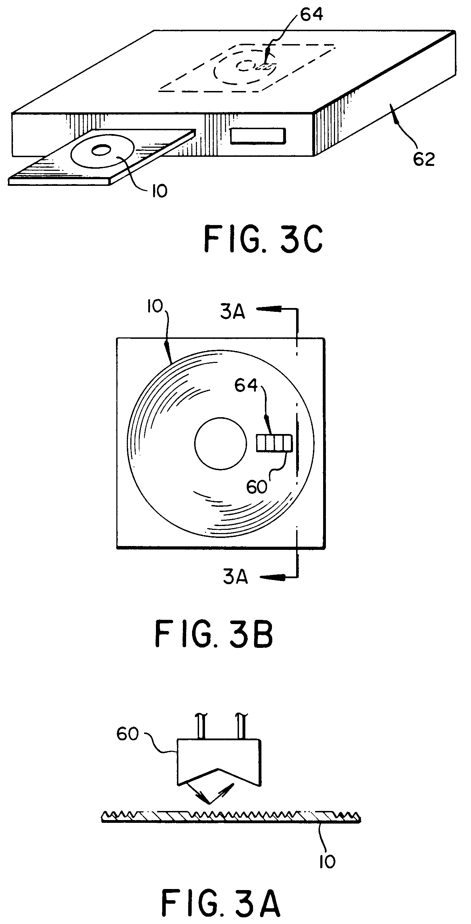

As shown in Figure 3A, a light emitting diode-phototransistor detector unit 60 is located to confront the label side of the compact disk 10 without touching it. Figure 3B illustrates the stacking of the detector units 60 to from an array 64 which is positioned along a radius line of the disk 10. Figure 3C illustrates a compact disk player 62 incorporating the array 64 for reading the disk 10. At least one detector unit 60 is needed for each partial ring 36-39 on the compact disk 10. When the compact disk 10 rotates, the regions 20 rotate past the array 64 of detector units 60.

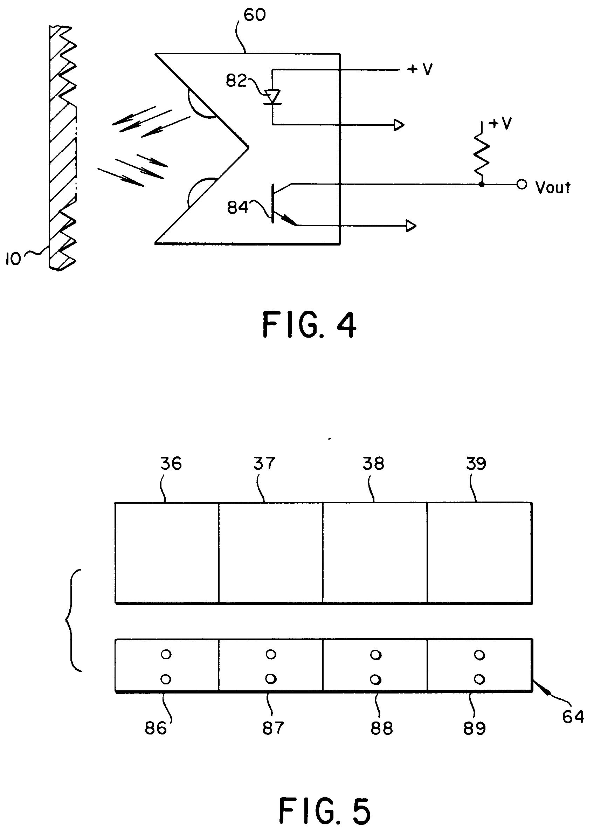

Figure 4 illustrates the typical geometry of the compact disk 10 and the detector unit 60 whereby a light emitting diode 82 produces light which is either blocked from reflecting from the compact disk 10 by a user mark or reflects from the compact disk 10 because no user mark is present. If the light reflects from the compact disk 10, the light is detected by a phototransistor 84. A suitable detector unit 60 that includes a single laser diode and a single phototransistor can be obtained from Texas Instruments as their model type TIL139 Source and Detector Assembly. It is also possible to use other types of sensors, such as CCDs (Charged Coupled Devices), in conjunction with other types of light sources to perform the mark detection.

Figure 5 illustrates in more detail the relationship between the array 64 of detector units 60 and the partial rings 36-39. For simplicity, the partial rings 36-39 are shown as rectilinear in Figure 5, yet in fact in the preferred embodiment, they are circular. As shown in Figure 5, the detector unit 86 is used to detect the timing ring 36. The other partial rings 37-39 have corresponding detector units 87-89, respectively.

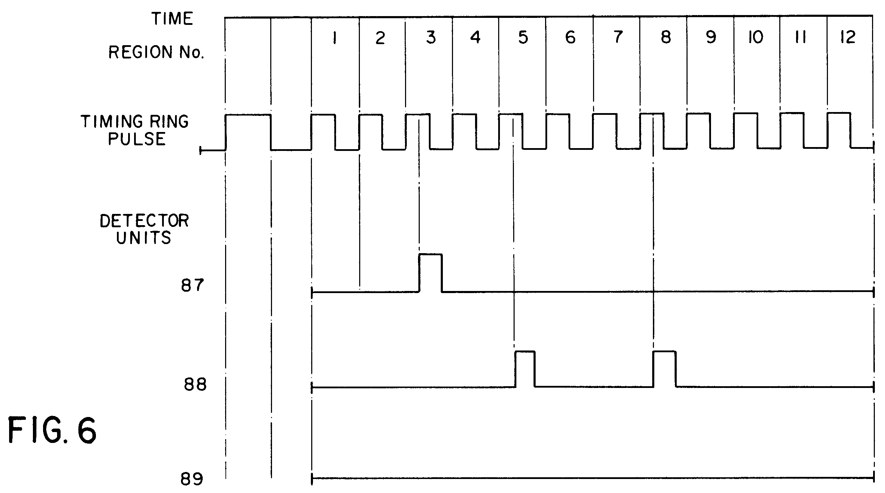

If the label 14 shown in Figure 2 is applied to the compact disk 10 shown in Figure 1 and then rotated under the detector arrangement as illustrated in Figure 5, the outputs of the detector units 60 would appear as shown in the timing diagram in Figure 6. Note that the diagram of Figure 6 assumes that a pulse is produced when a user mark is encountered and that the light is blocked from reflecting. The opposite sense could of course be used. As shown in Figure 6, the detector unit 87 produces a pulse when region 20 with the region number "3" is encountered (see Figure 2 for region number 3). Likewise, detector unit 88 produces a pulse when region numbers "5" and "8" are encountered and no pulse is produced by detector unit 89 since no regions 20, in partial ring 39, contain a user mark.

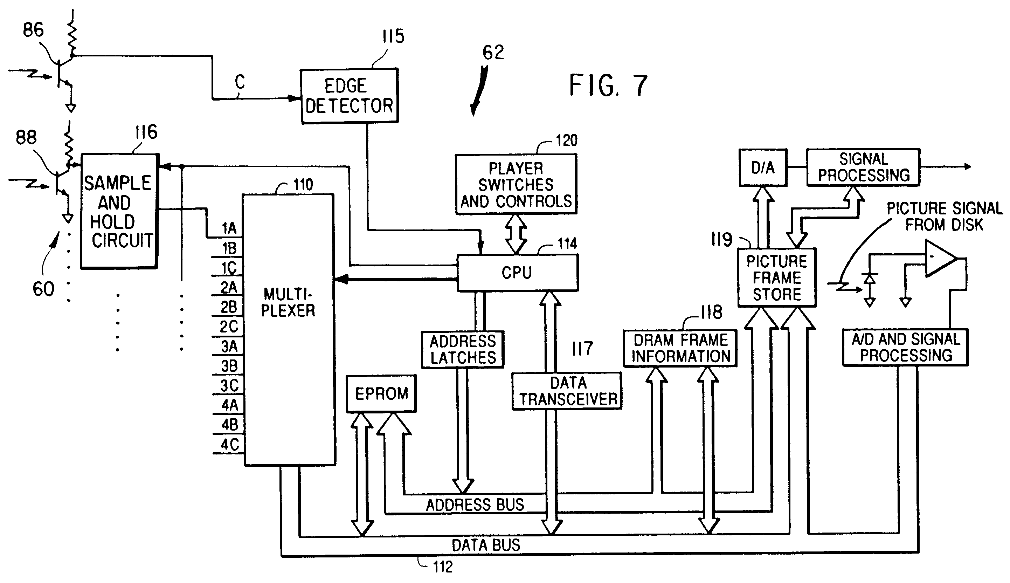

Fig. 7 illustrates the components of the present invention in a conventional compact disk player 62 used to process the signals from the partial rings 36-39. Multiplexer 110, which is formed using six 2-bit multiplexors, multiplex the outputs from the detectors 60 onto a data bus 112 responsive to selection signals from a central processing unit (CPU) 114. The clock signal c is provided to the CPU 114 through an edge detector circuit 115. When the CPU 114 detects the edge transition by the output of the edge detector circuit 115 going high, the CPU 114 increments an internal counter (not shown). The internal counter value is used to indicate which track and which region is being read. When a predetermined time delay, sufficient to allow the disk to rotate to the center of the regions being read, has elapsed, subsequent to the edge detection signal, the CPU 114 outputs a sample and hold signal to conventional sample and hold circuits 116, only one of which is shown for convenience, resulting in sampling and holding the outputs of the track detectors 88. At this time, the CPU 114 also supplies a one bit multiplex selection signal to the multiplexor 110 followed by an enable signal. The selection and enable signals cause the multiplexor 110 to place the outputs 1A-2C of the detectors 88, that is 6 bits, onto the bus 112. If the bus 112 is an 8 bit bus, it is preferable that the bits 1A-2C be placed in the low order bits of the upper byte. After the multiplexor 110 places the outputs 1A-2C on the bus 112, the CPU 114 reads this data off the bus 112 through a data buffer or transceiver 117. The CPU 114 then sends an inverted selection signal to the multiplexor 110 to place the outputs 3A-4C onto the bus 112. Once these outputs have been read by the CPU 114, the CPU 114 waits for another edge transition. When another edge transition is detected, the above discussed multiplexing of detector outputs 1A-2C and 3A-4C occurs again to place the outputs of the detectors 88 for the next frame subsection onto the bus 112.

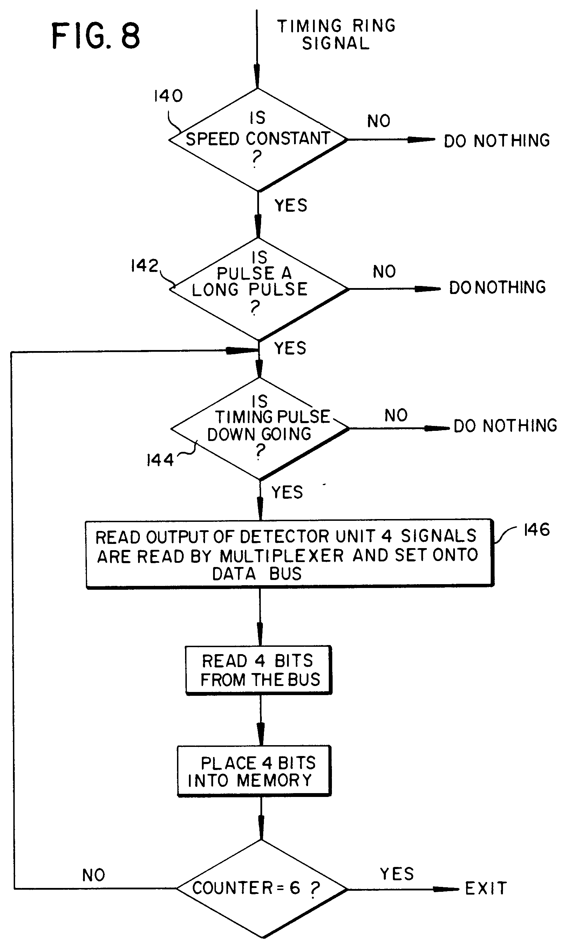

This cycle of reading continues until the contents of all regions have been determined and the information stored in a DRAM frame information memory 118. The CPU 114 performs the decoding logic illustrated in Fig. 8 and conventionally controls the display and skipping of the pictures stored in the frame store 119 responsive to the skipping information stored in frame memory 118. The remaining components in Fig. 7 which do not have reference numbers are components typically found in a photo CD player and will not be discussed in detail here. Although not shown, the typical photo CD player has several different CPUs and the processor 114 is preferably the processor which executes the software which performs the orientation and blanking operation based on inputs from the player switches and remote control unit devices 120.

Figure 8 illustrates the logic performed by the CPU 114 in determining whether a particular song track will be skipped. The output produced based on this logic is supplied to the skipping control software which also interfaces with the players switches and remote control unit devices 120. The logic depicted by Figure 8 can be implemented in a number of different ways. A person skilled in the art can provide an appropriate program for CPU 114 based on the logic discussed below. The logic shown in Figure 8 is illustrative with respect to the operations performed for the timing ring 36 and partial rings 37 through 39.

First, the CPU 114 determines 140 whether the speed of rotation of the compact disk 10 is constant by, for example, determining the periods between the index signal produced by the dark index mark 48. If the speed is not constant, the system continues to monitor the speed of the compact disk 10. Once the speed is constant, the CPU 114 checks to determine 142 whether the long pulse produced by dark index mark 48 has been produced. This can be determined by comparing the pulse widths of the timing ring pulses until the longest pulse is found. If the dark index mark 48 has been detected, the CPU determines 144 if the timing pulse of timing marks 58,59 is down going. If so, the CPU 114 reads 146 the outputs of the detector array 64 for each region 20 of partial rings 37 through 39 upon the sensing of an associated timing mark. This procedure continues for as many regions contained in a track, for example 6 in the described embodiment. When the procedure has been completed 6 times the program is exited.

Once the outputs of the detector array 60 have been read they are placed on the data bus 112 and stored in the information memory 118. The CPU 114 determines from the presence of a zero or a one bit whether the output for a region 20 is high. If so the player is directed to skip the track so indicated. Other variations in the hardware used to read the label of the present invention and to control a player or other device in response to the control indicia marked on the label are well within the skill of persons working in this art.

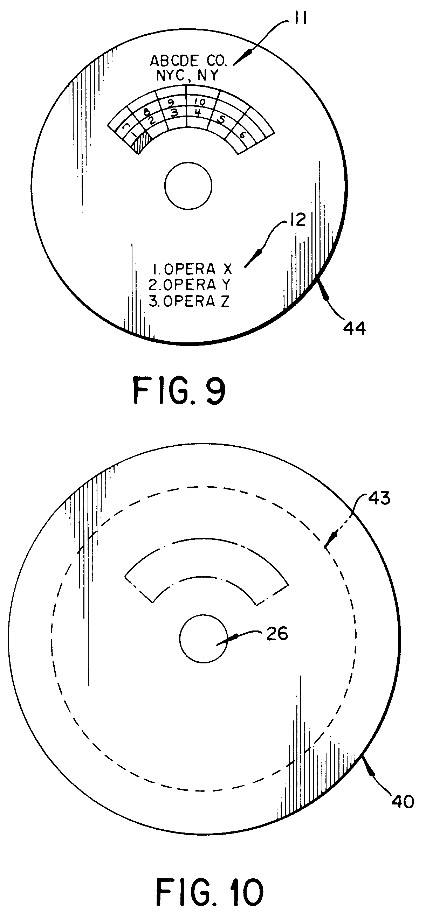

An alternate embodiment for the shape of the label 14 is shown in Figure 9. This label 44 is donut shaped and contains such information as the producing company's name 11 and the content information 12. In addition, it contains all the information available on label 14. Likewise, the label 44 has the user markable surface and the adhesive backing. This format of label 44 is preferably used with a compact disk that does not contain information 11, 12 printed directly on the compact disk, such as compact disk 40 shown in Figure 10, since the label 44 will then not cover any existing printed information. Compact disk 40 includes a designated area 43, as shown in Figure 10 by dashed lines, in which to locate the label 44 on the compact disk 40. The shape of the designated area 43 is equal to the shape of label 44. The designated space 43 is located on the compact disk 40 such that the label 44 is placed symmetrically about the axis 26 of the compact disk 40. This designated area 43 can be printed on the compact disk 40 by the compact disk manufacturer using light transparent material. If no designated area 43 exists on the compact disk 40, the user can still apply the label 44 to the compact disk 40 but may require assistance, such as a locating fixture or template, to properly locate the label 40. The label 40 is interpreted by a compact disk player 62 using the same technique described earlier for label 14.

The present invention has been described with respect to an embodiment for an audio compact disk which includes four partial rings which are marked to indicate skipping of a song track. It is possible to have more or less partial rings depending on the size of the audio compact disk and the number of song tracks stored on the compact disk. Likewise, the circumferential pattern could also be replaced by a rectilinear or matrix type pattern in which the regions 20 containing the user marks for skipping the song track would all be the same size. Other patterns are also possible, though the methods used to scan the compact disk as the compact disk rotates could differ slightly with each pattern. In addition, the user mark is used to indicate which song track to skip. The alternate sense could be used; that is, the user mark could be used to indicate which song track to play.

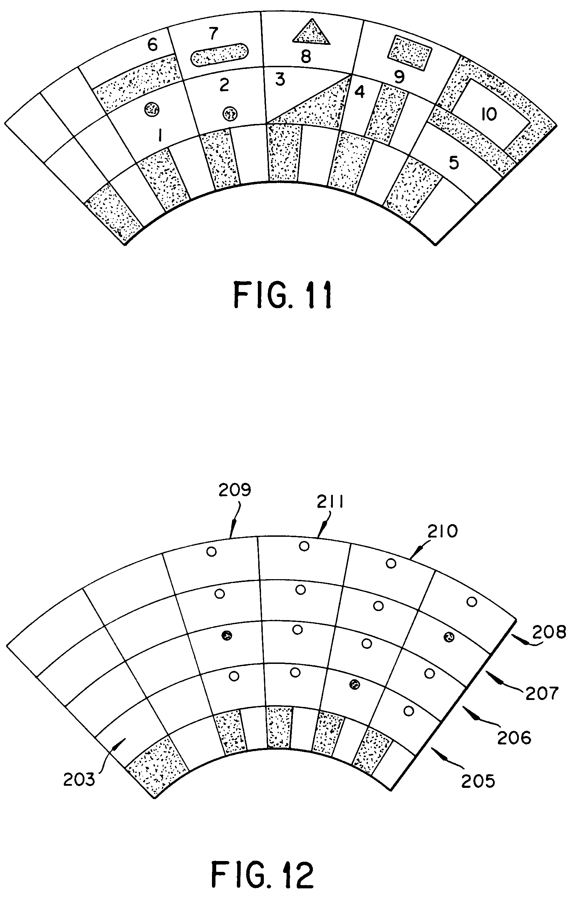

The identified area 15 used to indicate to the user where the user mark should be placed could have a pattern or placement different than the circle shown in Figure 2. Figure 11 illustrates a variety of patterns and placements that could be used with the timing ring 36 of the present invention. Note that each pattern or placement for the identified area 15 is located so that a portion of the user mark is located in the radial center of the region 20. This location is important since the scanning system samples each region 20 at this location to determine if a user mark is present.

The label pattern shown in Figure 12 provides an area for the user to indicate whether a track should be skipped and also an area for marking the order of play. In the pattern, there are circles printed in each space 203 in circumferential rings 205-208. These circles indicate the area for marking to chose the order of play or skipping playing. As shown in Figure 12, for example, the circle is marked in ring 206 for sector 209 which is designated to track number 1, hence track number 1 is the second one to play. Similarly, track number 3 is the first one to play since the circle is marked in ring 205 for sector 210. There are no circles marked for sector 211, which means track number 2 is skipped for playing.

Corresponding to the circles marked in Figure 12, the order of play and skipping play are shown below.

| **Track No.** | **Order of Play** | **Skipping** |
|---|---|---|
| 1 | 2nd | No |
| 2 | -- | Yes |
| 3 | 1st | No |
| 4 | 3rd | No |

In the pattern, there must be a sufficient number of circumferential rings to accommodate all the tracks on the data storage medium. In the player, there must be enough light-emitter detector units to cover all the rings.

Though the present invention has been described in detail with respect to an audio compact disk, the invention applies to data storage media for storing various information, including audio compact disks, photographic compact disks, and compact disks with Read Only Memory (CD ROM), Therefore, it is possible to use the present invention for skipping or selecting other information stored on a compact disk besides a song track. For example, if the label is applied to a photographic compact disk, the user could indicate which photographs should be skipped during display. However, more regions may need to be added to the label since, for example, a photographic compact disk is currently capable of holding over ninety images.

The user marks on the stick-on label need not be only produced by the user. A machine could produce the marks on the label based on the input from the user as she/he previews the compact disk. With the use of a photographic compact disk, this type of machine might be used by a photofinisher or be available at a minilab area.

The features on the label could be extended to indicate other user-desired features beyond the selecting of information to be skipped. For example, in the use of an audio compact disk, the label could indicate bass, treble, and volume changes to a particular song track. However, a more complex marking region requiring a more complex mark sensor would be required to implement such features. Likewise, in the use of a photographic compact disk, the label could indicate picture orientation such as disclosed in the previously referenced patent application by Y. Ellen Lee. Again, a more complex marking region requiring a more complex mark sensor would be required to implement such features. In both examples, by utilizing an attachable and removable label, the disk design is kept simple and premastered disks, such as the audio compact disk and the CD ROM disks, can be easily converted to carry this user programmable information.

Of course a compact disk player with the required modifications is required to take advantage of and interpret the user markable labels. Indeed, a feature of the compact disk player itself might be a selection means that either utilizes the user-programmable label or not.

It is also possible to use a label of this type to encode information or provide a "key" that is required in order for a disk to play. For example, this might be a method of providing a security system since only with the decoding information on the label could the compact disk be read. Such a system may be of use to CD ROM manufacturers since they could distribute compact disks with coded labels that limited access to certain files on the disk. In the absence of a coded label, a no-read situation could occur.

The label might also be used to instruct a computer system which programs to load into memory. For example, one label might instruct the computer system to load only a specific subset of the information from the compact disk while a second label might instruct the computer system to load the entire set of information from the compact disk onto the system.

The many features and advantages of the present invention are apparent from the detailed specification and thus it is intended by the appended claims to cover all such features and advantages of the present invention which fall within the true spirit and scope of the invention. Further, since numerous modifications and changes will readily occur to those skilled in the art, it is not desired to limit the present invention to the exact construction and operation illustrated and described, and accordingly all suitable modifications and equivalents may be resorted to that fall within the scope of the present invention.

## Claims

1. For use with a data storage medium:
an attachable and removable label applied to a surface of said data storage medium and having a markable surface for writably indicating the skipping and/or modifying of the play of data stored on the medium.

2. A label as defined in Claim 1, having an adhesive coating on one side thereof.

3. A label as defined in Claim 1, wherein said markable surface includes regions arranged in circumferential rings for writably indicating the skipping and/or the modifying of the play of data stored on said data storage medium.

4. A label as defined in Claim 1, having selectable areas corresponding to machine readable control actions.

5. For use with a data storage medium, a markable label attachable to said data storage medium, said markable label being divided into rings including a timing ring with timing marks and user data rings, said user data rings being divided into regions corresponding to the information stored on said data storage medium, each of said regions aligned with said timing marks, each of said regions having at least one area which when marked indicates the information to be skipped and/or modified for play.

6. In combination:
a data storage medium having data stored therein;
an attachable and removable label for receiving marks representing control information;
reading means for reading said control information from said label and for providing control signals; and
means responsive to said control signals for controlling the skipping and/or modifying of the play of the data stored on said storage medium.

7. The combination as defined in Claim 6, wherein said reading means comprises:
light emitting diode-phototransistor detector units for reading the label as the storage medium rotates; and
a processor responsive to said detector units for determining the information to be skipped and/or modified for play.

8. The combination as defined in Claim 7 wherein said reading means further comprises a multiplexer connected between said detector units and said processor.

9. A method for skipping and/or modifying the play of information on a data storage medium, comprising the steps of:
a) forming a label for said data storage medium having an indicia corresponding to said information on said data storage media;
b) applying said formed label to said data storage medium;
c) marking selected indicia corresponding to said information to indicate the desired play of said information; and
d) reading the indicia of said formed label to access said information in accordance with said selected indicia.

10. A data storage medium, such as a compact disk, combined with a data reader in which a stick-on label is applied to the data storage medium on the side opposite to the data readable side,
the stick-on label includes a user markable surface on one side and an adhesive coating on the other side which allows the label to be attached and removed from the data storage medium,
the label comprises regions containing region numbers which correspond to information stored on the data storage medium,
a user mark in a region indicates that the corrsponding information is to be skipped when the data storage medium is played on the data reader,
the printing which outlines the regions and provides the region numbers is light transparent,
the data reader includes a scanner for scanning the regions as the data storage medium rotates,
a timing ring with timing marks aids in the sampling of the user marks on the stick-on label.
